# EUROPEAN PATENT SPECIFICATION

(11) **EP 2 287 074 B1**
(45) Date of publication and mention of the grant of the patent: **19.12.2012**
(21) Application number: 09742181.2
(22) Date of filing: 24.04.2009
(51) Int. Cl.: B64F 5/00

(54) **DEVICE FOR REMOVING AND INSTALLING AIRCRAFT COMPONENTS**
VORRICHTUNG ZUM ENTFERNEN UND INSTALLIEREN VON FLUGZEUGKOMPONENTEN
DISPOSITIF POUR RETIRER ET INSTALLER DES COMPOSANTS D'UN AÉRONEF

(30) Priority: 06.05.2008 ES 200801294
(43) Date of publication of application: 23.02.2011
(73) Proprietor: EADS Construcciones Aeronauticas, S.A., 28022 Madrid (ES)
(72) Inventor: JIMENO DE LA TORRE, Julio, E-28022 Madrid (ES)
(74) Representative: Elzaburu Marquez, Alberto
(86) International application number: PCT/ES2009/070115
(87) International publication number: WO 2009/135975

(56) References cited:
- EP-A- 1 348 626
- EP-A- 1 878 662
- GB-A- 742 771
- US-A- 2 275 216
- US-A- 2 944 331

## Description

### Field of the Invention

The present invention relates to a device for removing and installing aircraft components, in particular aircraft power plant components, and to a method for installing and operating such a device.

### Background of the Invention

At present, and particularly for big aircraft, removing and installing aircraft power plant components for maintenance or other operations requires specific devices adapted to and specifically designed for each of the power plant component to be installed and/or removed. This is the case, for example, of the nacelle and mounting arrangement for an aircraft engine of document WO 96/11843, or of the mounting assembly for an aircraft auxiliary power unit disclosed in document US 2002/0084381. Also, in document US 5205513, a method for the removal of large turbine engines is disclosed.

These devices require additional equipment (support equipment or operating cranes, for example) for these operations. In some cases, the additional equipment, which is very heavy and of big dimensions for big aircraft, is not accessible in ground for operating such removal and/or installation operations, and due to these dimensions, cannot be transported in the same aircraft to which these operations will be performed. These solutions are not only impractical but also very expensive.

For example, document US 2007/0290179 A1 discloses a general vehicular component apparatus for moving large equipments, which is intended to be moved over a substrate surface, therefore displacing the equipment necessary. The problem posed by this apparatus is that it cannot be transported in parts, nor is this apparatus valid for an interchangeability and a movement of equipment of different characteristics.

Document EP 1878662 A1 discloses an arrangement for transporting and removing specifically an engine core, this arrangement comprising a platform, boot straps which are individually adjusted to align the platform, also using a pylon and mountings released from the pylon in order to have the engine core being suspended on certain members. This system is not, however, able to be used with only small modifications on different elements that are to be manipulated, neither is it easily transported nor easily mounted on site.

The present invention comes to solve these drawbacks.

### Summary of the Invention

The object of the present invention, in a first aspect, is to provide a device according to claim 1 for removing and installing aircraft power plant components, this device being modular, such that it comprises a main system which is common for every component which is to be installed or removed, and it also comprises several subcomponents which vary depending on the component which is to be installed or removed. Moreover, the device according to the invention, being modular, can be easily transported in parts in the same aircraft to which the maintenance or other operations will be performed. It does not require additional equipment for its installation or operation, as it is man force operated, thus being able to be operated in any possible place.

In a second aspect, the object of the present invention is to provide a method according to claim 14 for installing the device for removing and installing aircraft power plant components, said method comprising the following steps:
a) removing the forward upper cowl from the engine;
b) opening the forward engine doors and fixing the forward open rods;
c) opening the rear engine doors and fixing the rear open rods;
d) positioning climbing means for the operators to climb;
e) lifting the forward frame of the device and attaching it to attaching points;
f) attaching the frame rear support bars or the rear frame to attaching points;
g) attaching the device lateral frames to the forward frame and to the rear support bars or the rear frame.

In a third aspect, the object of the present invention is to provide a method according to claim 15 for operating the device for removing and installing aircraft power plant components as it will be further described in detail.

Other features and advantages of the present invention will be disclosed in the following detailed description of illustrative embodiments of its object in relation to the attached figures.

### Description of the Drawings

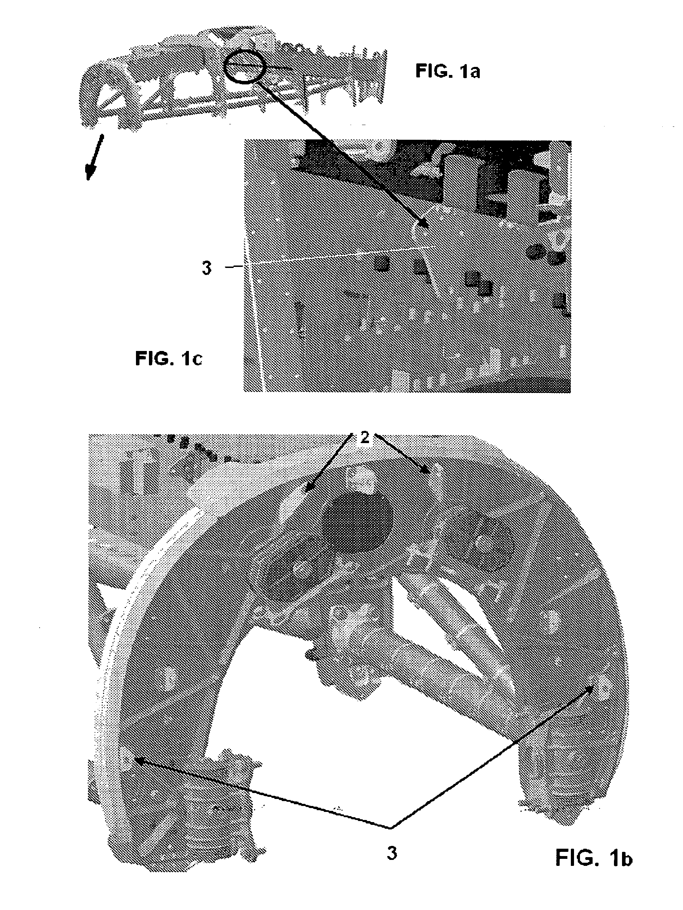

Figures 1a, 1b and 1c show the attaching points to which the device according to the invention is assembled.
Figure 2 shows the modular configuration of a first embodiment of the device according to the invention.
Figure 3 shows the modular configuration of a second embodiment of the device according to the invention.
Figure 4 shows the lugs configuration in the frame of the device according to the invention.
Figure 5 shows the configuration of the device according to the invention for installing and removing the aircraft power plant lower structure.
Figure 6 shows the configuration of the device according to the invention for installing and removing the Line Replaceable Units (LRUs).
Figure 7 shows the configuration of the device according to the invention for installing and removing the exhaust nozzle.
Figure 8 shows the configuration of the device according to the invention for installing and removing the blades.
Figure 9 shows the configuration of the device according to the invention for installing and removing the propeller.
Figure 10 shows the configuration of the device according to the invention for installing and removing the aircraft engine and aircraft Engine Vibrations Isolator System (EVIS).
Figure 11 shows the step of unscrewing the bolts that attach the forward upper cowl to the engine for installing the device according to the invention.
Figure 12 shows the step of removing the forward upper cowl from the engine for installing the device according to the invention.
Figure 13 shows the step of opening the forward engine doors and fixing the forward open rods for installing the device according to the invention.
Figure 14 shows the step of opening the rear engine doors and fixing the rear open rods for installing the device according to the invention.
Figure 15 shows the step of positioning the climbing means for installing the device according to the invention.
Figure 16 shows the step of lifting and attaching the forward frame of the device according to the invention.
Figure 17 shows the step of attaching the frame rear support bars or the rear frame of the device according to the invention.
Figure 18 shows the step of attaching the device lateral frames of the device according to the invention.
Figure 19 shows the step of opening the bottom access door and removing it from the engine when removing aircraft Line Replaceable Units (LRUs) operating the device according to the invention.
Figure 20 shows the step of installing lifting means to the lugs of the device according to the invention.
Figure 21 shows the step of installing the work surface and the cradle to the lifting means, removing the corresponding Line Replaceable Unit (LRU) operating the device according to the invention.
Figure 22 shows the step of attaching the lifting means to the lugs when removing the aircraft power plant lower structure operating the device according to the invention.
Figure 23 shows the step of adjusting the straps to the lower structure to be removed operating the device according to the invention.
Figure 24 shows the step of lowering down the lower structure operating the device according to the invention.
Figure 25 shows the step of attaching the exhaust beams to the device modular frame when removing the aircraft power plant exhaust nozzle operating the device according to the invention.
Figure 26 shows the step of attaching the lifting means to the lugs and adjusting the straps to the nozzle exhaust when removing the exhaust nozzle operating the device according to the invention.
Figure 27 shows the step of lowering down the nozzle by operating the lifting means when removing the exhaust nozzle operating the device according to the invention.
Figure 28 shows the step of attaching the yoke of the device to the device modular frame when removing the aircraft power plant blades, the propeller, the engine or the EVIS operating the device according to the invention.
Figure 29 shows the step of installing the support bars that link the forward frame and the yoke when removing the aircraft power plant blades, the propeller, the engine or the EVIS operating the device according to the invention.
Figure 30 shows the step of attaching the support bars that link the device modular frame to the attaching points when removing the aircraft power plant blades, the propeller, the engine or the EVIS operating the device according to the invention.
Figure 31 shows the step of installing the platform in the device modular frame when removing the blades or the propeller operating the device according to the invention.
Figure 32 shows the step of attaching the different removal beams and support bars that compose the blade removal structure when removing the blades operating the device according to the invention.
Figure 33 shows the step of attaching the lifting means to the blade removal structure that lifts the blade lifter or the spinner lifter and operate the lifting means when removing the blades operating the device according to the invention.

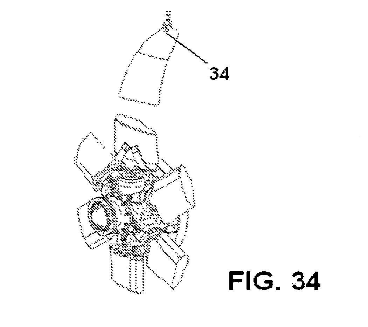

Figure 34 shows a blade lifter configuration used when operating the device according to the invention.
Figure 35 shows a spinner lifter configuration used when operating the device according to the invention.
Figure 36 shows the step of attaching the propeller removal beam and the beam support bars when removing the propeller operating the device according to the invention.
Figure 37 shows the step of attaching a carriage assembly to the propeller removal beam where it is attached the lifting means to allow the displacement along the beam operating the device according to the invention.
Figure 38 shows the step of attaching the attaching points of the device according to the invention to the engine.
Figures 39 and 40 show the steps of lowering the engine and change EVIS.

### Detailed Description of the Invention

The present invention relates to a modular device for removing and installing aircraft power plant components, such as the lower aircraft structure, heavy Line Replaceable Units (LRUs), exhaust nozzle, blade, propeller, Engine Vibration Isolator System (EVIS) and engine. The device according to the invention comprises a modular frame 41 assembled in attaching points 2, 3 of the pylon lugs. Preferably, the attaching points 2 are placed in the front part of the pylon lugs, whereas the attaching points 3 are placed on the rear part.

The frame 41 of the device according to the invention comprises the following components:
- a yoke 4
- at least two first support bars 5 and at least two second support bars 6
- a forward frame 7
- two lateral frames 8
- a rear frame 9 or rear support bars 10.

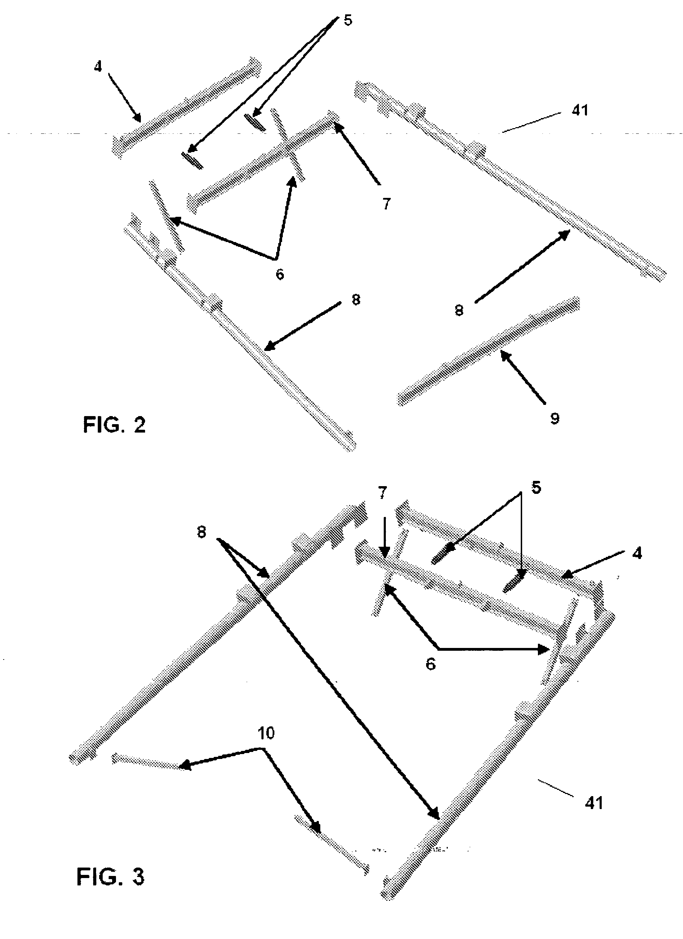

According to one embodiment of the invention, the rear frame 9 comprises one frame that contains two lateral bumpers that lean against the pylon structure in order to avoid high lateral loads against the attaching points 3, as shown in Figure 2. This configuration with only one frame 9 is used for installing and removing aircraft engines and aircraft Engine Vibration Isolator Systems (EVIS). According to a second embodiment of the invention, the rear frame comprises two frame rear support bars 10, as it is shown in Figure 3. This configuration with two frame rear support bars 10 is used for the installation and removal of lower aircraft structure, Line Replaceable Units (LRUs), exhaust nozzle, blades and propeller. The total weight for each of the two configurations is about 70 kg, which makes that the device according to the invention can be easily transported in the same aircraft to which these operations are going to be performed.

Any single part of the modular frame, except lateral beams, could be installed by a single operator, without additional ground support equipment.

Other advantage of this device is that lifting means could be operated from ground, that means that the risk of falling of an operator during maintenance tasks is reduced.

The modular frame 41 of the device according to the invention comprises two front lugs 11 and two rear lugs 12 for attaching the frame 41 to the attaching points 2, 3 of the pylon lugs. The frame 41 also comprises several lugs 13 for installing lifting means to said frame 41. These lugs 13 have different positions according to the components to be installed or removed.

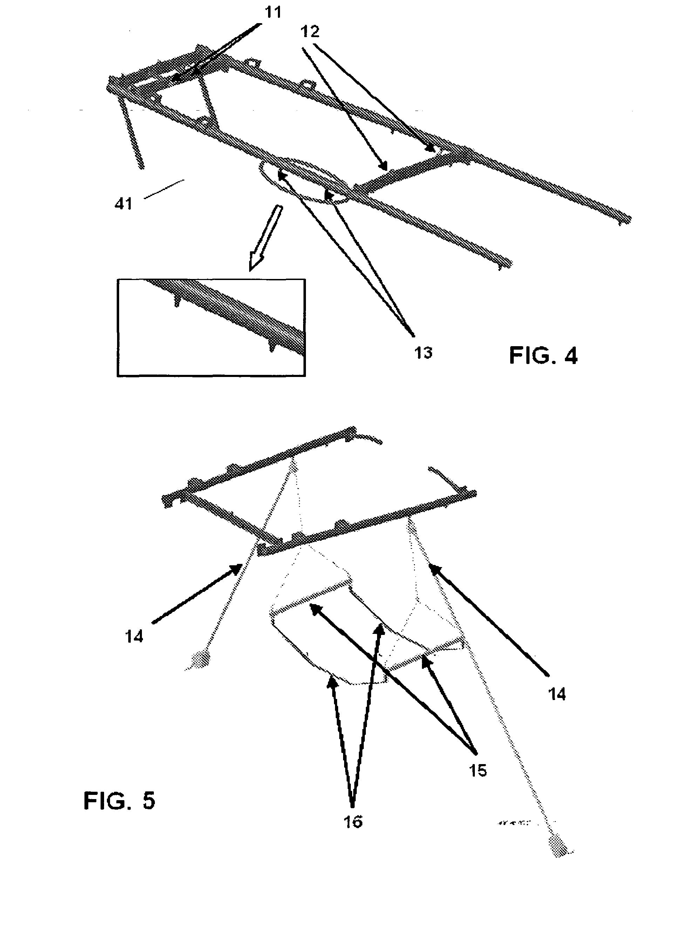

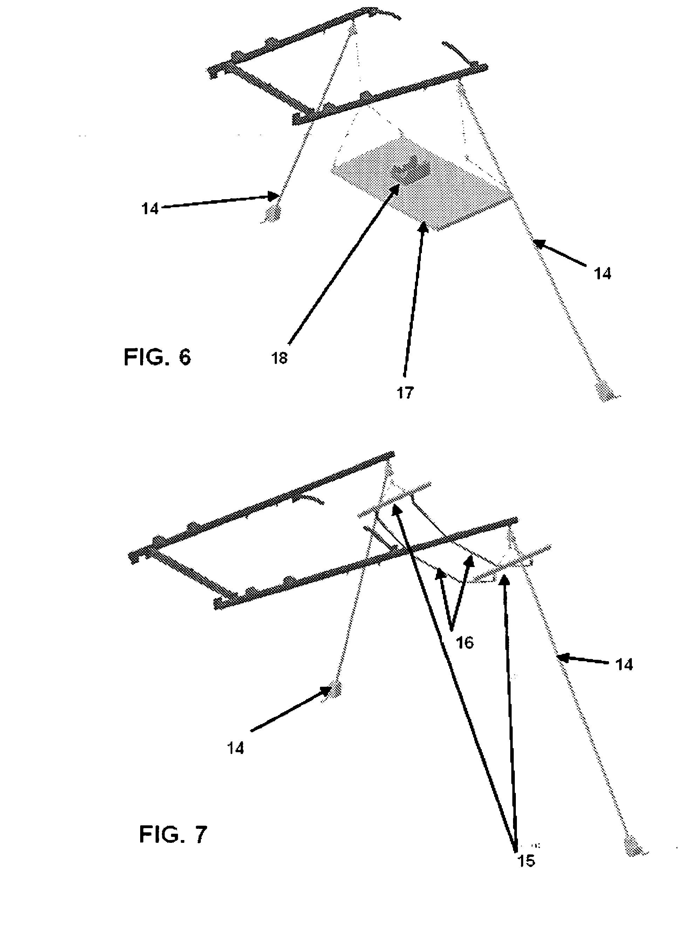

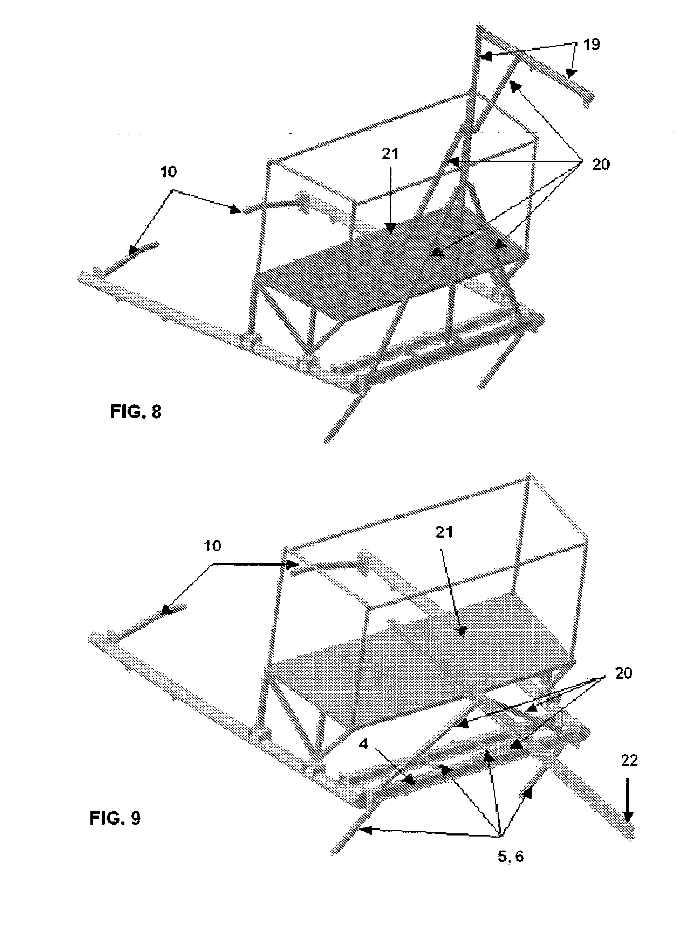

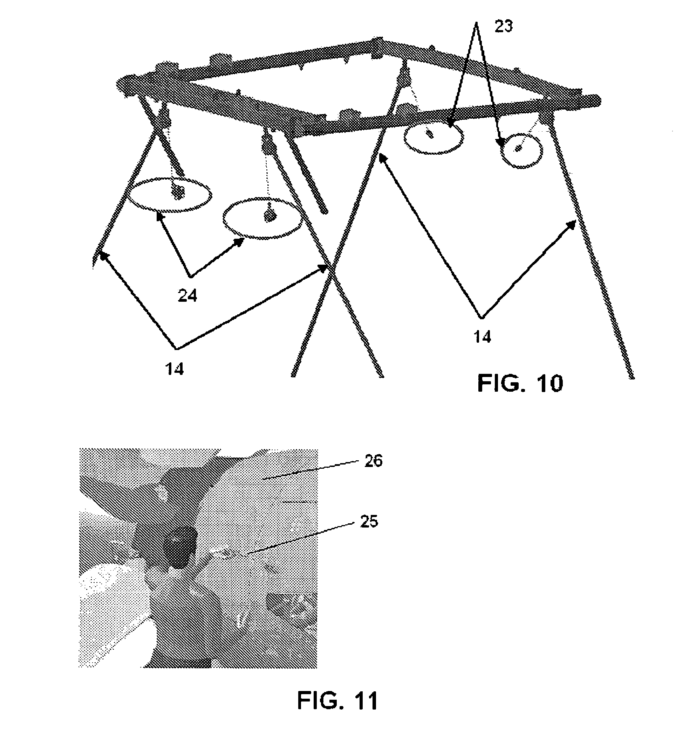

The device according to the invention is configured in different ways, always departing from the modular frame 41 already described, depending on the aircraft power plant component which is to be installed or removed. We will describe now the different configurations of the device according to the invention.
1. Configuration for installing and removing the aircraft power plant *lower structure* (Figure 5). It is not necessary to install the forward yoke 4 and the support bars 5 and 6 from figure 3. The lifting means 14, such as mini hoists, are installed on lugs 13 that are placed on opposite lateral frames 8. The lifting means 14 are attached to the lower structure lifting device that comprises lifting beams 15 and straps 16 to configure a structure for moving the aircraft power plant lower structure.
2. Configuration for installing and removing *Line Replaceable Units (LRUs)* (Figure 6). It is not necessary to install the forward yoke 4 and the support bars 5 and 6 from figure 3. The lifting means 14 are installed on lugs 13 that are placed on opposite lateral frames 8. The lifting means 14 are attached to the LRU lifting device that comprises a work surface 17 and a cradle 18 for moving the Line Replaceable Units (LRUs).
3. Configuration for installing and removing the *exhaust* nozzle (Figure 7). It is not necessary to install the forward yoke 4 and the support bars 5 and 6 from figure 3. The lifting means 14 are installed on lugs 13 that are placed on opposite prolongations of the lateral frames 8. The lifting means 14 are attached to the exhaust nozzle lifting device that comprises lifting beams 15 and straps 16 to configure a structure for moving the exhaust nozzle.
4. Configuration for installing and removing *blades* (Figure 8). For this configuration, blade removal beams 19, beam support bars 20 and a modular platform with hand rails and safety points 21 are necessary for configuring a structure to move the blades.
5. Configuration for installing and removing the *propeller* (Figure 9). For this configuration, a modular platform with hand rails and safety points 21, a propeller removal beam (with a carriage assembly to displace the propeller lifting means along the beam) 22 and beam support bars 20 are necessary for configuring a structure to move the propeller.
6. Configuration for installing and removing aircraft *engine and aircraft Engine Vibration Isolator Systems (EVIS)* (Figure 10). For this configuration, lifting means 14 are attached to the front yoke 4 and rear frame 9 lugs, rear attaching points 23 and front attaching points 24 are necessary attached to the engine attaching points in order to remove/install aircraft engine and EVIS.

In a second aspect, the present invention relates to a method for installing the device for removing and installing aircraft power plant components. Firstly, the device according to the invention has to be installed and, secondly, the installation or removal of the component with the device according to the invention has to take place, this installation or removal being specific and comprising different steps depending on the aircraft power plant component to be installed or removed.

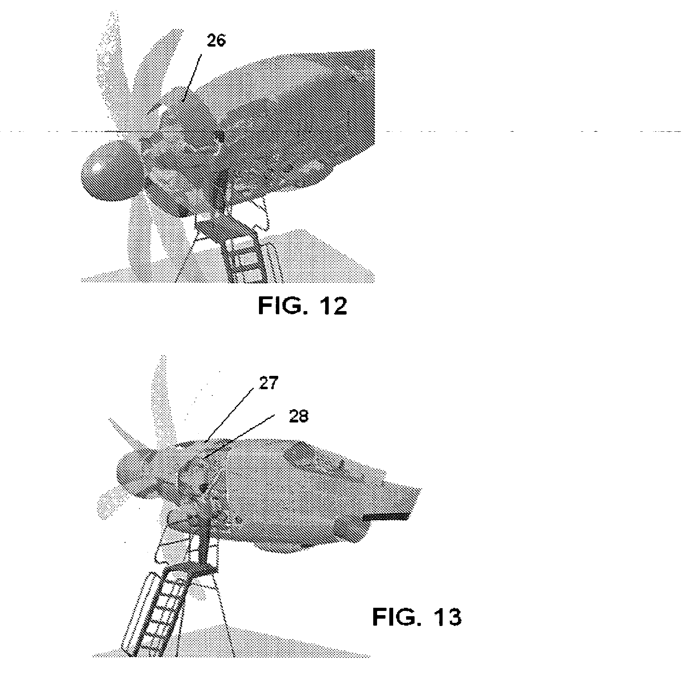

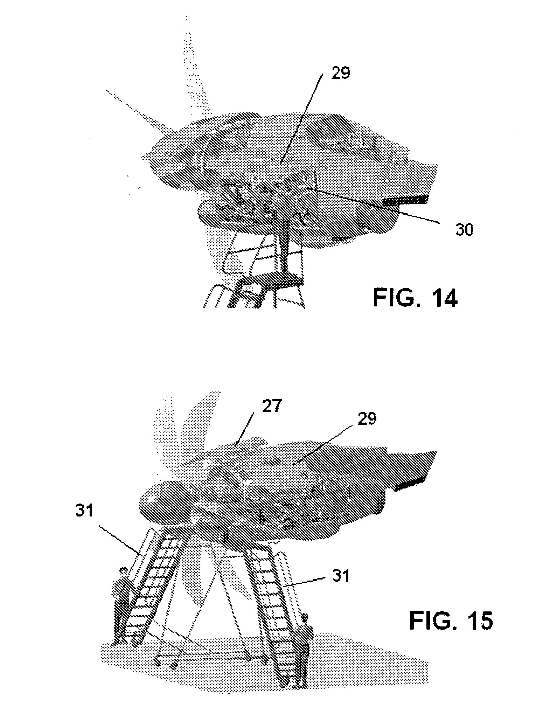

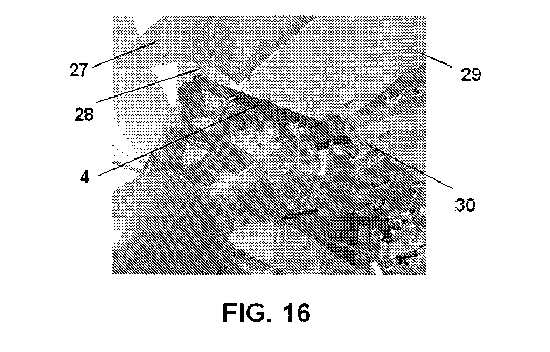

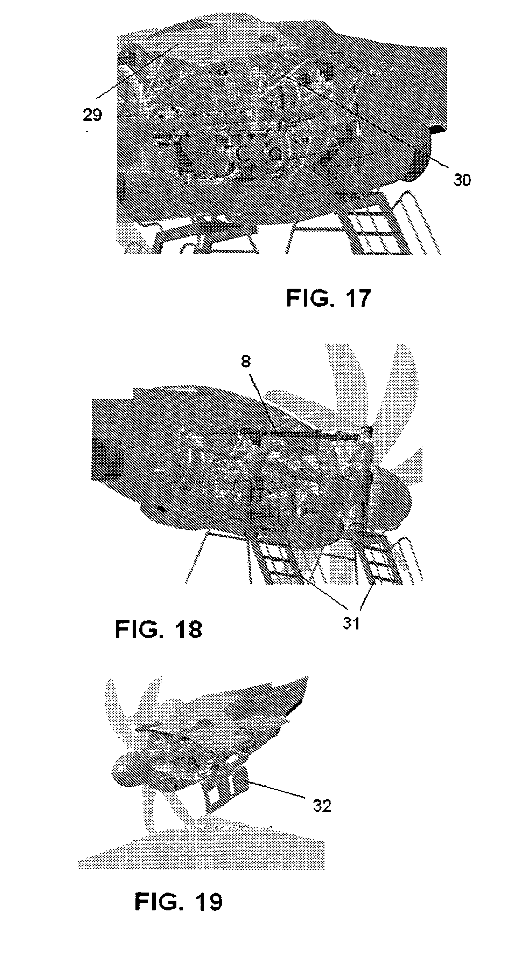

The installation of the device according to the invention comprises the following steps:
1. unscrewing the bolts 25 that attach the forward upper cowl 26 to the engine (Figure 11);
2. removing the forward upper cowl 26 from the engine (Figure 12);
3. opening the forward engine doors 27 and fixing the forward open rods 28 (Figure 13);
4. opening the rear engine doors 29 and fixing the rear open rods 30 (Figure 14);
5. positioning the climbing means, such as ladders 31, for the operators to climb (Figure 15);
6. lifting the forward frame 7 of the device and attaching it to the attaching points 2 (Figure 16);
7. attaching the frame rear support bars 10 or the rear frame 9 to the attaching points 3 (Figure 17);
8. attaching the device lateral frames 8 to the forward frame 7 and to the rear support bars 10 or the rear frame 9 (Figure 18).

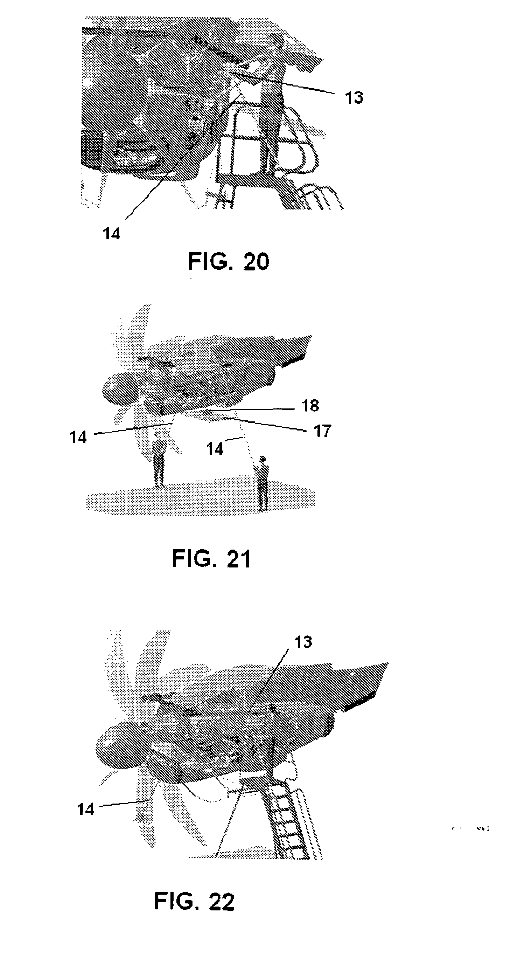

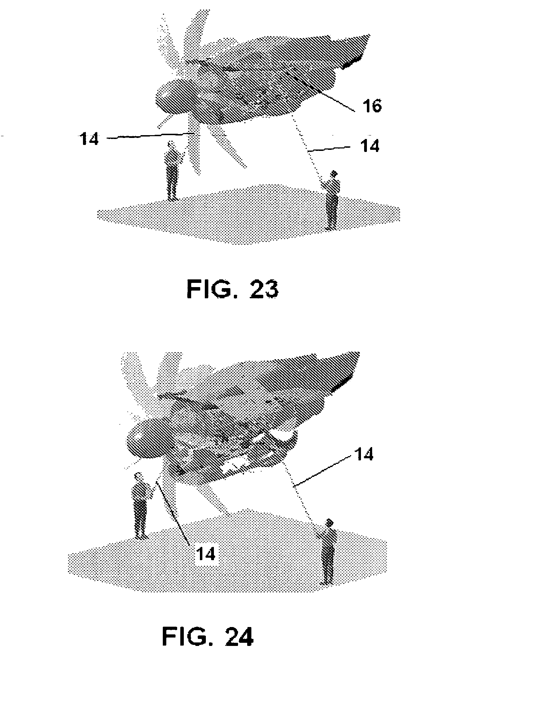

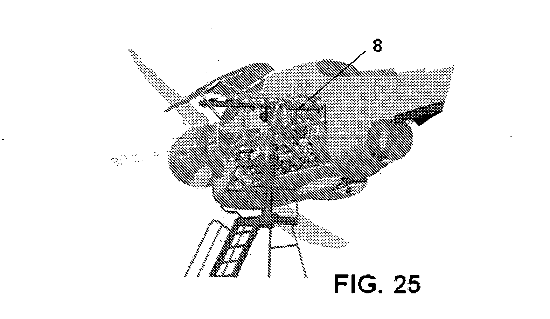

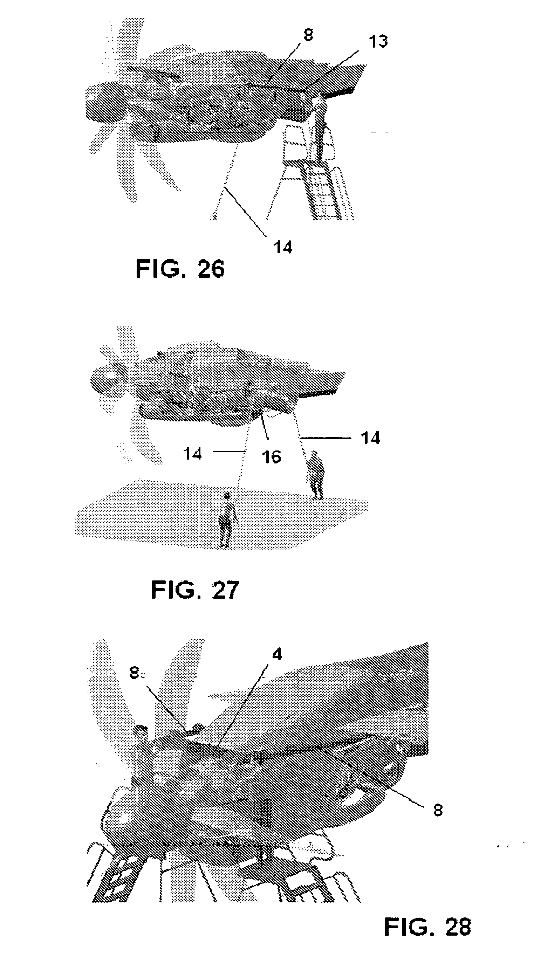

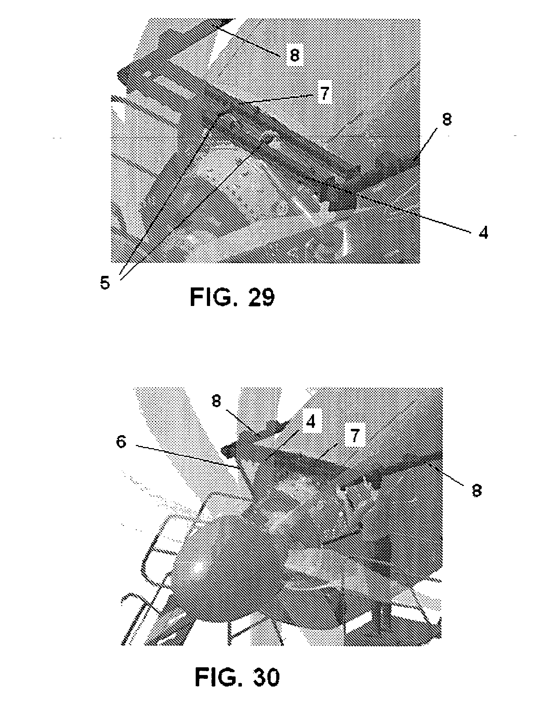

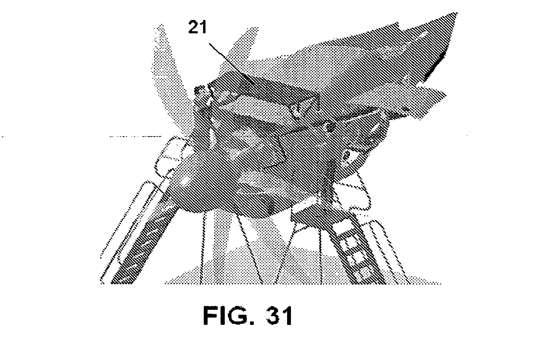

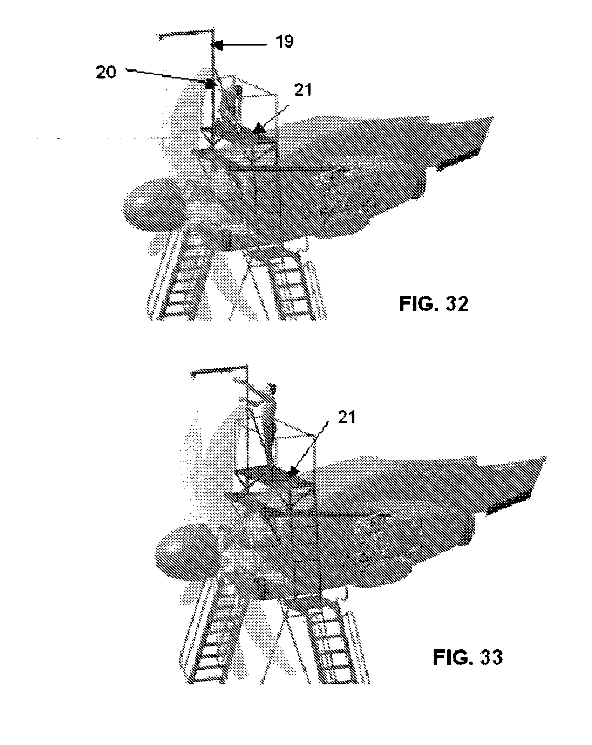

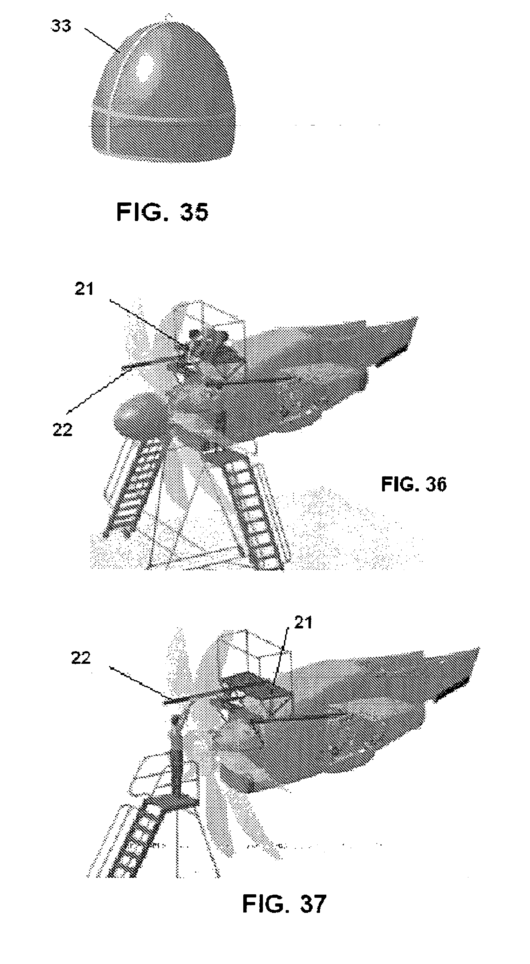

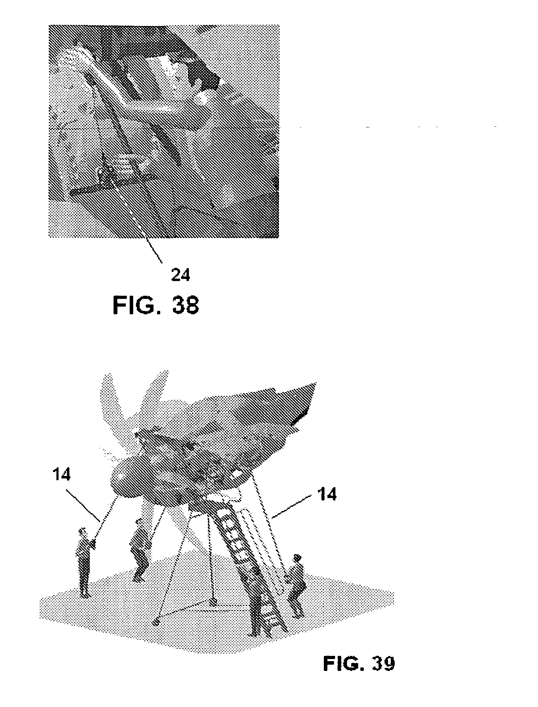

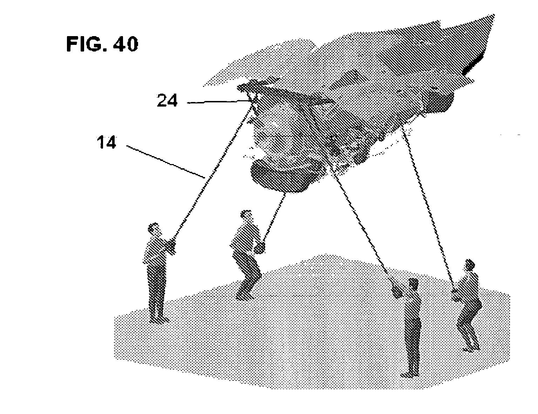

In a third aspect, the present invention relates to a method for operating the device for removing and installing aircraft power plantcomponents. Once the installation of the device has been completed, the installation or removal of the different components takes place. We will now describe this third aspect of the invention in reference to the aircraft power plant components to be operated.
1. Removal of heavy *Line Replaceable Units (LRUs)* comprises the following steps:
   a) opening the bottom access door 32 and removing it from the engine (Figure 19);
   b) attaching the lifting means 14 on the lugs 13;
   c) installing the work surface 17 and the cradle 18 to the lifting means 14 (Figure 20);
   d) removing the corresponding Line Replaceable Unit (LRU) lowering it down in its cradle 18 (Figure 21).
2. Removal of aircraft power plant *lower structure* comprises the following steps:
   a) attaching the lifting means 14 to the lugs 13 (Figure 22);
   b) Installing the lower structure lifting device which comprises lifting beams 15 and adjusting straps 16.
   c) adjusting the straps 16 to the aircraft power plant lower structure to be removed (Figure 23);
   d) lowering down the cited aircraft power plant lower structure operating the lifting means 14 (Figure 24).
3. Removal of the*exhaust nozzle* comprises the following steps:
   a) attaching the exhaust beams to the device modular frame 41 (Figure 25);
   b) removing the exhaust cowling attached to the engine by bolts;
   c) attaching the lifting means 14 to the lugs 13 (Figure 26);
   d) installing the exhaust nozzle lifting device which comprises lifting beams 15 and adjusting the straps 16;
   e) Adjusting the straps 16 to the exhaust nozzle to be removed;
   f) lowering down the nozzle by operating the lifting means 14 (Figure 27).
4. Removal of *blades* (it is to be noted that it is not necessary to open the forward engine doors 27 to install the device modular frame 41 according to the invention to remove a blade) comprises the following steps:
   a) attaching the yoke 4 of the device to the device modular frame 41 (Figure 28);
   b) installing the first support bars 5 that link the forward frame 7 and the yoke 4 (Figure 29);
   c) attaching the second support bars 6 that link the device modular frame 41 to the attaching points 2 (Figure 30);
   d) installing the modular platform with hand rails and safety points 21 in the device modular frame 41 (Figure 31);
   e) attaching the different removal beams 19 and support bars 20 that compose the blade removal structure (Figure 32);
   f) attaching a propeller blade lifter 34 or a spinner lifter 33 if the blade or the spinner are to be removed respectively;
   g) attaching the lifting means 14 to the blade lifting structure and the blade lifter 34 or the spinner lifter 33 and operate the lifting means 14 (Figure 33).
5. Removal of the *propeller* comprises the following steps:
   a) attaching the propeller removal beam 22 with the carriage assembly and the beam support bars 20 (Figure 36);
   b) installing a propeller lifter to the propeller;
   c) attaching the lifting means 14 to the carriage assembly, attached to the propeller removal beam 22, and the propeller lifter to perform operating (Figure 37).
6. Removal and installation of aircraft *Engine Vibration* isolator *System (EVIS)* comprises the following steps:
   a) installing the lifting means 14 to the yoke 4 and to the rear frame 9 (Figure 39);
   b) installing load cells to the lifting means 14 (in order to control the weight that held everyone);
   c) attaching the attaching points 23 and 24 to the engine attaching points and the corresponding lifting means 14;
   d) holding the complete engine plus propeller weight with the lifting means 14, taking care not to force engine against pylon structure (watching load cells output) (Figure 40).
7. Removal and installation of aircraft *Engine* is performed operating the lifting means 14 (Figure 40), being necessary to remove previously the aircraft power plant lower structure, the exhaust cowl, the propeller and the Engine Vibration System (EVIS) before lowering down the aircraft engine.

Modifications comprised within the scope defined by the following claims can be introduced in the preferred embodiments which have just been described.

## Claims

1. Modular device for removing and installing aircraft power plant components **characterized in that** it comprises a modular frame (41) which can be transported in parts in the 552mℓ aircraft to which the maintenance or other operation will be performed and which is common for every power plant component of said aircraft which is to be installed or removed, the modular device also comprising a plurality of subcomponents which can also be transported in parts in said aircraft that vary depending on the component to be installed or removed, the modular frame (41) being fixable to the aircraft in front attaching points (2) of the pylon lugs of the airframe and in rear attaching points (3) of the pylon lugs of the airframe, this frame (41) comprising:
- a forward frame (7) ;
- at least two lateral frames (8) and
- a rear structure (9, 10).

2. Modular device for removing and installing aircraft power plant components according to claim 1 **characterized in that** the frame (41) also comprises a yoke (4).

3. Modular device for removing and installing aircraft power plant components according to any of claims 1-2 **characterized in that** the frame (41) also comprises at least two first support bars (5) and at least two second support bars (6).

4. Modular device for removing and installing aircraft power plant components according to claims 1 to 3 **characterized in that** the modular frame (41) comprises one frame (9) as rear structure, this frame (9) comprising two lateral bumpers for contacting pylon structure of the airframe.

5. Modular device for removing and installing aircraft power plant components according to claims 1 to 3 **characterized in that** the modular frame (41) also comprises two frame rear support bars (10) as rear structure.

6. Modular device for removing and installing aircraft power plant components according to any of the previous claims **characterized in that** the modular frame (41) also comprises two front lugs (11) and two rear lugs (12) for attaching the frame (41) to the attaching points (2,3) of the pylon lugs of the airframe.

7. Modular device for removing and installing aircraft power plant components according to any of the previous claims **characterized in that** the frame (41) also comprises lugs (13) for installing lifting means (14) to said frame (41), these lugs (13) having different positions according to the components to be installed or removed.

8. Modular device for removing and installing aircraft power plant components according to claim 1 **characterized in that** it comprises lifting means (14) installed on lugs (13) placed on opposite lateral frames (8), the lifting means (14) being also attached to the lower structure lifting device that comprises lifting beams (15) and straps (16).

9. Modular device for removing and installing aircraft power plant components according to claim 1 **characterized in that** it comprises lifting means (14) installed on lugs (13) placed on opposite lateral frames (8), the lifting means (14) > being also attached to a line replaceable unit (LRU) lifting device that comprises a work surface (17) and a cradle (18) for moving the aircraft.

10. Modular device for removing and installing aircraft power plant components according to claim 1 **characterized in that** it comprises lifting means (14) installed on lugs (13) placed on opposite prolongations of lateral frames (8), the lifting means (14) being attached to an exhaust nozzle lifting device that comprises lifting beams (15) and straps (16).

11. Modular device for removing and installing aircraft power plant components according to claims 1-3 **characterized in that** it comprises blade removal beams (19), beam support bars (20) and a modular platform for removing and installing blades.

12. Modular device for removing and installing aircraft power plant components according to claims 1-3 **characterized in that** it comprises a modular platform, a propeller removal beam (22) and beam support bars (20) configuring a structure to move the propeller.

13. Modular device for removing and installing aircraft power plant components according to claims 2-3 **characterized in that** it comprises lifting means (14) attached to the front yoke (4) and rear frame (9) lugs, rear attaching points (23) and front attaching points (24) attached to the engine attaching points.

14. Method for installing the device for removing and installing aircraft power plant components according to any of the previous claims, said method comprising the following steps:
a) removing a forward upper cowl (26) from the engine;
b) opening a forward engine doors (27);
c) opening a rear engine door (29) ;
d) positioning climbing means for the operators to climb;
e) lifting the forward frame (7) of the device and attaching it to the attaching points (2);
f) attaching frame rear support bars (10) or the rear frame (9) to the attaching points (3);
g) attaching the device lateral frames (8) to the forward frame (7) and to the rear support bars (10) or the rear frame (9).

15. Method for operating the device for removing and installing aircraft power plant components according to claim 9 **characterized in that** the method comprises the following steps:
a) opening a bottom access door (32) and removing it from an engine;
b) attaching the lifting means (14) on the lugs (13);
c) installing the work surface (17) and the cradle (18) to the lifting means (14);
d) removing the corresponding Line Replaceable Unit (LRU) lowering it down in its cradle (18).

## Patentansprüche

1. Modulare Vorrichtung zum Entfernen und Installieren von Flugzeugtriebwerk-Komponenten,
**dadurch gekennzeichnet, dass**
sie einen modularen Rahmen (41) umfasst, der in Teilen in dem Flugzeug transportiert werden kann, an dem Wartung oder andere Vorgänge durchgeführt werden, und der für jede Triebwerkkomponente des Flugzeugs, die installiert oder entfernt werden soll, der gleiche ist, wobei die modulare Vorrichtung des Weiteren eine Vielzahl von Teilkomponenten umfasst, die ebenfalls in Teilen in dem Flugzeug transportiert werden können und die sich in Abhängigkeit von der zu installierenden oder zu entfernenden Komponente unterscheiden, der modulare Rahmen (41) an dem Flugzeug an vorderen Anbringungspunkten (2) der Pylonhalter des Flugwerks und an hinteren Anbringungspunkten (3) der Pylonhalter des Flugwerks befestigt werden können, und dieser Rahmen (41) umfasst:
- einen vorderen Rahmen (7);
- wenigstens zwei seitliche Rahmen (8), und
- eine hintere Struktur (9,10).

2. Modulare Vorrichtung zum Entfernen und Installieren von Flugzeugtriebwerk-Komponenten nach Anspruch 1,
**dadurch gekennzeichnet, dass**
der Rahmen (41) auch ein Joch (4) umfasst.

3. Modulare Vorrichtung zum Entfernen und Installieren von Flugzeugtriebwerk-Komponenten nach einem der Ansprüche 1-2,
**dadurch gekennzeichnet, dass**
der Rahmen (41) des Weiteren wenigstens zwei erste Haltestege (5) und wenigstens zwei zweite Haltestege (6) umfasst.

4. Modulare Vorrichtung zum Entfernen und Installieren von Flugzeugtriebwerk-Komponenten nach den Ansprüchen 1 bis 3,
**dadurch gekennzeichnet, dass**
der modulare Rahmen (41) einen Rahmen (9) als hintere Struktur umfasst, wobei dieser Rahmen (9) zwei seitliche Puffer umfasst, die mit der Pylonstruktur des Flugwerks in Kontakt kommen.

5. Modulare Vorrichtung zum Entfernen und Installieren von Flugzeugtriebwerk-Komponenten nach den Ansprüchen 1 bis 3,
**dadurch gekennzeichnet, dass**
der modulare Rahmen (41) des Weiteren zwei hintere Haltestege (10) des Rahmens als hintere Struktur umfasst.

6. Modulare Vorrichtung zum Entfernen und Installieren von Flugzeugtriebwerk-Komponenten nach einem der vorangehenden Ansprüche,
**dadurch gekennzeichnet, dass**
der modulare Rahmen (41) des Weiteren zwei vordere Halter (11) und zwei hintere Halter (12) zum Anbringen des Rahmens (41) an den Anbringungspunkten (2,3) der Pylonhalter des Flugwerks umfasst.

7. Modulare Vorrichtung zum Entfernen und Installieren von Flugzeugtriebwerk-Komponenten nach einem der vorangehenden Ansprüche,
**dadurch gekennzeichnet, dass**
der Rahmen (41) des Weiteren Halter (13) zum Installieren von Hebeeinrichtungen (14) an dem Rahmen (41) umfasst, wobei diese Halter (13) je nach den zu installierenden oder zu entfernenden Komponenten unterschiedliche Positionen haben.

8. Modulare Vorrichtung zum Entfernen und Installieren von Flugzeugtriebwerk-Komponenten nach Anspruch 1,
**dadurch gekennzeichnet, dass**
sie Hebeeinrichtungen (14) umfasst, die an Haltern (13) installiert sind, die an einander gegenüberliegenden seitlichen Rahmen (8) angeordnet sind, wobei die Hebeeinrichtungen (14) auch an der unteren Hebestruktur angebracht sind, die Hebeträger (15) und Bänder (16) umfasst.

9. Modulare Vorrichtung zum Entfernen und Installieren von Flugzeugtriebwerk-Komponenten nach Anspruch 1,
**dadurch gekennzeichnet, dass**
sie Hebeeinrichtungen (14) umfasst, die an Haltern (13) installiert sind, die an einander gegenüberliegenden seitlichen Rahmen (8) angeordnet sind, wobei die Hebeeinrichtungen (14) auch an einer Hebeeinheit für eine LRU (line replaceable unit) angebracht sind, die eine Arbeitsfläche (17) und einen Korb (18) zum Bewegen der Flugzeug-LRU umfasst.

10. Modulare Vorrichtung zum Entfernen und Installieren von Flugzeugtriebwerk-Komponenten nach Anspruch 1,
**dadurch gekennzeichnet, dass**
sie Hebeeinrichtungen (14) umfasst, die an Haltern (13) installiert sind, die sich an einander gegenüberliegenden Verlängerungen seitlicher Rahmen (8) befinden, wobei die Hebeeinrichtungen (14) an einer Schubdüsen-Hebevorrichtung angebracht sind, die Hebeträger (15) und Bänder (16) umfasst.

11. Modulare Vorrichtung zum Entfernen und Installieren von Flugzeugtriebwerk-Komponenten nach den Ansprüchen 1-3,
**dadurch gekennzeichnet, dass**
sie Blatt-Entfernungsträger (19), Träger-Haltestege (20) und eine modulare Plattform zum Entfernen und Installierten von Blättern umfasst.

12. Modulare Vorrichtung zum Entfernen und Installieren von Flugzeugtriebwerk-Komponenten nach den Ansprüche 1-3,
**dadurch gekennzeichnet, dass**
sie eine modulare Plattform, einen Propeller-Entfernungsträger (22) und Träger-Haltestege (20) umfasst, die eine Struktur zum Bewegen des Propellers bilden.

13. Modulare Vorrichtung zum Entfernen und Installieren von Flugzeugtriebwerk-Komponenten nach den Ansprüchen 2-3,
**dadurch gekennzeichnet, dass**
sie Hebeeinrichtungen (14) umfasst, die an dem vorderen Joch (4) und Haltern des hinteren Rahmens (9), hinteren Anbringungspunkten (23) und vorderen Anbringungspunkten (24) angebracht sind, die an den Triebwerk-Anbringungspunkten angebracht sind.

14. Verfahren zum Installieren der Vorrichtung zum Entfernen und Installieren von Flugzeugtriebwerk-Komponenten nach einem der vorangehenden Ansprüche, wobei das Verfahren die folgenden Schritte umfasst:
a) Entfernen einer vorderen oberen Haube (26) von dem Triebwerk;
b) Öffnen einer vorderen Triebwerkklappe (27);
c) Öffnen einer hinteren Triebwerkklappe (29);
d) Positionieren einer Steigeinrichtung zum Steigen für die Bedienungspersonen;
e) Anheben des vorderen Rahmens (7) der Vorrichtung und Anbringen desselben an den Anbringungspunkten (2);
f) Anbringen von hinteren Haltestegen (10) des Rahmens oder des hinteren Rahmens (9) an den Anbringungspunkten (3);
g) Anbringen der seitlichen Rahmen (8) der Vorrichtung an dem vorderen Rahmen (7) und an den hinteren Haltestegen (10) oder dem hinteren Rahmen (9).

15. Verfahren zum Betätigen der Vorrichtung zum Entfernen und Installieren von Flugzeugtriebwerk-Komponenten nach Anspruch 9,
**dadurch gekennzeichnet, dass**
das Verfahren die folgenden Schritte umfasst:
a) Öffnen einer unteren Zugangsklappe (32) und Entfernen derselben von einem Triebwerk;
b) Anbringen der Hebeeinrichtungen (14) an den Haltern (13);
c) Installieren der Arbeitsfläche (17) und des Korbs (18) an den Hebeeinrichtungen (14);
d) Entfernen der entsprechenden LRU (line replaceable unit) und Absenken derselben in ihren Korb (18).

## Revendications

1. Dispositif modulaire destiné à retirer et installer des composants d'un groupe propulseur d'un aéronef, **caractérisé en ce qu'**il comprend un châssis modulaire (41) qui peut être transporté en pièces détachées dans le même aéronef sur lequel doit être réalisée une opération de maintenance ou toute autre opération, et qui est commun à chaque composant de groupe propulseur dudit aéronef qui doit être installé ou retiré, le dispositif modulaire comprenant en outre une pluralité de sous-composants qui peuvent également être transportés en pièces détachées dans ledit aéronef, qui varient selon le composant à installer ou à retirer, le châssis modulaire (41) pouvant être fixé à l'aéronef à des points d'attache avant (2) des oreilles de fixation de pylône de la cellule et à des points d'attache arrière (3) des oreilles de fixation de pylône de la cellule, ce châssis (41) comprenant :
- un châssis avant (7) ;
- au moins deux châssis latéraux (8) et
- une structure arrière (9, 10).

2. Dispositif modulaire destiné à retirer et installer des composants d'un groupe propulseur d'un aéronef selon la revendication 1, **caractérisé en ce que** le châssis (41) comprend également un bras (4).

3. Dispositif modulaire destiné à retirer et installer des composants d'un groupe propulseur d'un aéronef selon l'une quelconque des revendications 1 ou 2, **caractérisé en ce que** le châssis (41) comprend également au moins deux premières barres de support (5) et au moins deux seconde barres de support (6).

4. Dispositif modulaire destiné à retirer et installer des composants d'un groupe propulseur d'un aéronef selon l'une quelconque des revendications 1 à 3, **caractérisé en ce que** le châssis modulaire (41) comprend un châssis (9) en tant que structure arrière, ce châssis (9) comprenant deux tampons latéraux destinés à entrer en contact avec la structure de pylône de la cellule.

5. Dispositif modulaire destiné à retirer et installer des composants d'un groupe propulseur d'un aéronef selon l'une quelconque des revendications 1 à 3, **caractérisé en ce que** le châssis modulaire (41) comprend également deux barres de support arrière de châssis (10) en tant que structure arrière.

6. Dispositif modulaire destiné à retirer et installer des composants d'un groupe propulseur d'un aéronef selon l'une quelconque des revendications précédentes, **caractérisé en ce que** le châssis modulaire (41) comprend également deux oreilles de fixation avant (11) et deux oreilles de fixation arrière (12) pour attacher le châssis (41) aux points d'attache (2, 3) des oreilles de fixation de pylône de la cellule.

7. Dispositif modulaire destiné à retirer et installer des composants d'un groupe propulseur d'un aéronef selon l'une quelconque des revendications précédentes, **caractérisé en ce que** le châssis (41) comprend également des oreilles de fixation (13) pour installer des moyens de levage (14) contre ledit châssis (41), ces oreilles de fixation (13) présentant des positions différentes selon les composants à installer ou à retirer.

8. Dispositif modulaire destiné à retirer et installer des composants d'un groupe propulseur d'un aéronef selon la revendication 1, **caractérisé en ce qu'**il comprend des moyens de levage (14) installés sur les oreilles de fixation (13) placées sur les châssis latéraux opposés (8), les moyens de levage (14) étant également attachés au dispositif de levage de structure inférieur qui comprend des poutres de levage (15) et des sangles (16).

9. Dispositif modulaire destiné à retirer et installer des composants d'un groupe propulseur d'un aéronef selon la revendication 1, **caractérisé en ce qu'**il comprend des moyens de levage (14) installés sur les oreilles de fixation (13) placées sur les châssis latéraux opposés (8), les moyens de levage (14) étant également attachés à un dispositif de levage d'unité remplaçable en ligne (LRU) qui comprend une surface de travail (17) et un berceau (18) pour déplacer l'aéronef.

10. Dispositif modulaire destiné à retirer et installer des composants d'un groupe propulseur d'un aéronef selon la revendication 1, **caractérisé en ce qu'**il comprend des moyens de levage (14) installés sur les oreilles de fixation (13) placées sur des prolongations opposées de châssis latéraux (8), les moyens de levage (14) étant attachés à un dispositif de levage de tuyère d'échappement qui comprend des poutres de levage (15) et des sangles (16).

11. Dispositif modulaire destiné à retirer et installer des composants d'un groupe propulseur d'un aéronef selon l'une quelconque des revendications 1 à 3, **caractérisé en ce qu'**il comprend des poutres de dépose de pale (19), des barres de support de poutre (20) et une plateforme modulaire pour retirer et à installer des pales.

12. Dispositif modulaire destiné à retirer et installer des composants d'un groupe propulseur d'un aéronef selon l'une quelconque des revendications 1 à 3, **caractérisé en ce qu'**il comprend une plateforme modulaire, une poutre de dépose d'hélice (22) et des barres de support de poutre (20) configurant une structure pour déplacer l'hélice.

13. Dispositif modulaire destiné à retirer et installer des composants d'un groupe propulseur d'un aéronef selon les revendications 2 et 3, **caractérisé en ce qu'**il comprend des moyens de levage (14) attachés au bras avant (4) et aux oreilles de fixation de châssis arrière (9), des points d'attache arrière (23) et des points d'attache avant (24) attachés aux points d'attache du moteur.

14. Procédé pour installer le dispositif destiné à retirer et installer des composants d'un groupe propulseur d'un aéronef selon l'une quelconque des revendications précédentes, ledit procédé comprenant les étapes suivantes consistant à :
a) retirer un capot supérieur avant (26) du moteur ;
b) ouvrir une trappe de moteur avant (27) ;
c) ouvrir une trappe de moteur arrière (29) ;
d) positionner des moyens de montée qui permettent aux opérateurs de monter ;
e) lever le châssis avant (7) du dispositif et l'attacher aux points d'attache (2) ;
f) attacher les barres de support arrière de châssis (10) ou le châssis arrière (9) aux points d'attache (3) ;
g) attacher les châssis latéraux (8) de dispositif au châssis avant (7) et aux barres de support arrière (10) ou au châssis arrière (9).

15. Procédé pour actionner le dispositif destiné à retirer et installer des composants d'un groupe propulseur d'un aéronef selon la revendication 9, **caractérisé en ce que** le procédé comprend les étapes suivantes consistant à :
a) ouvrir une trappe d'accès inférieure (32) et la retirer d'un moteur ;
b) attacher les moyens de levage (14) sur les oreilles de fixation (13) ;
c) installer la surface de travail (17) et le berceau (18) sur les moyens de levage (14) ;
d) retirer l'unité remplaçable en ligne (LRU) correspondant en l'abaissant dans son berceau (18).
